(19) Europäisches Patentamt

European Patent Office

Office européen des brevets

(11) **EP 3 163 510 B1**

(12) # EUROPEAN PATENT SPECIFICATION

(45) Date of publication and mention
of the grant of the patent:
**06.03.2019  Bulletin 2019/10**

(51) Int Cl.:
***G06K 19/073*** (2006.01)

(21) Application number: **15812163.2**

(22) Date of filing: **25.06.2015**

(86) International application number:
**PCT/KR2015/006512**

(87) International publication number:
**WO 2015/199472 (30.12.2015 Gazette 2015/52)**

(54) **CONTACT-TYPE APPARATUS AND METHOD FOR INSPECTING SIDE CHANNELS OF SMARTCARD**

KONTAKTARTIGE VORRICHTUNG UND VERFAHREN ZUR INSPEKTION DER SEITENKANÄLE EINER CHIPKARTE

APPAREIL DE TYPE À CONTACTS ET PROCÉDÉ D'INSPECTION DE CANAUX LATÉRAUX D'UNE CARTE À PUCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **25.06.2014   KR 20140078284**

(43) Date of publication of application:
**03.05.2017   Bulletin 2017/18**

(73) Proprietor: **Kookmin University Industry Academy Cooperation Foundation**
**Seoul 136-702 (KR)**

(72) Inventors:
 • **KIM, Jin-Bae**
 **Suwon-si**
 **Gyeonggi-do 441-708 (KR)**

 • **JI, Jae-Deok**
 **Seongnam-si**
 **Gyeonggi-do 463-882 (KR)**
 • **HAN, Dong-Guk**
 **Seoul 136-775 (KR)**

(74) Representative: **Groth & Co. KB**
**P.O. Box 6107**
**102 32 Stockholm (SE)**

(56) References cited:
**KR-A- 20050 015 269     KR-A- 20050 054 774**
**KR-A- 20080 073 636     KR-A- 20110 060 569**

 • **MESSERGES T S ET AL: "INVESTIGATIONS OF POWER ANALYSIS ATTACKS ON SMARTCARDS", USENIX WORKSHOP ON SMARTCARD TECHNOLOGY, XX, XX, 10 May 1999 (1999-05-10), pages 151-161, XP002905430,**

**Description**

**TECHNICAL FIELD**

The present invention relates to a contract-type apparatus and method for inspecting side channels of a combined smartcard, and more particularly to, a contact-type apparatus and method for inspecting side channels of a combined smartcard, largely increasing analysis ability of contact-type side channels inspection using an operational amplifier (OP-AMP).

**DISCUSSION OF RELATED ART**

Smartcardsare widely used in various fields, e.g., financial IC cards, mobile phones, and electronic passports. "Combinedsmartcards," which are of a type having both a contact terminal and a non-contact type RF communication means,are widely used particularly in credit cards or other financial IC cards.

However, as the importance of security evaluation grows, safety evaluation of a side-channel attackon the combinedsmartcard has strengthened.

The side-channel attack is an attack method in which internal secret information,e.g.,an encryption key, is acquired from the side channel by measuring physical characteristics such as execution time in communication, power consumption, and electromagnetic wave radiation.

Originally, a smartcard stores a secret key of a user inside the card in order to prevent forgery of the card and is operated by power supplied from an external power source. Since the smartcard performs the operation on the secret data every time it operates, there is a possibility that the side channel information regarding the power consumption is leaked at the time of the operation.

That is, when a side-channel attack occurs, a user secret key may be estimated by performing a statistical process on observation data, e.g., power consumption,execution time measurement, and information using electromagnetic frequency radiation of a device in which a cryptographic algorithm of a smartcard is operated.

Generally, in systems using direct current power, a supply voltage is constant (constant voltage). Therefore, according to a method of checking a side-channel which is one of the power analysis methods, in order to analyze the power, as shown in Equation 1, a change amount of the current is measured and then multiplied by a constant voltage.

$$\text{Equation 1}$$

$$P\,(\text{power}) = V\,(\text{voltage}) \times I\,(\text{current})$$

Since instruments such as a general oscilloscope are difficult to directly measure current, a current-to-voltage converter is used to analyze the power in a power analysis. The simplest form of the current-to-voltage converter is to connect a resistor for voltage drop in series on a power analysis circuit of the smartcard and to measure using voltage difference by the resistor.

However, in the conventional power analysis circuit, V (voltage) to be treated as a constant is distributed to the current-to-voltage converter and the smartcard connected to each other in series. Accordingly, when the consumption power of the smartcard is changed, the supply voltage is also affected.

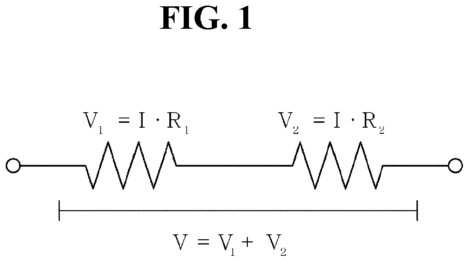

With reference to Fig.1, the above described problem will be described in more detail. A voltage-applied smartcard may be considered to an electric circuit, and a smartcard may be considered to a resistor. In Fig. 1, $R_1$ is a smartcard. $R_2$ is a resistor for voltage drop connected with the smartcard in series.

When a smartcard is inserted into a contact type card reader or the like to allow a circuit to be connected, a constant voltage V with a certain magnitude is applied. For example, of +5 V of a constant voltage is applied for stable operation of the smartcard. When in order to detect a change in power generated while the smartcard is performing encryption algorithm, a resistor for voltage resistor $R_2$ is connected in series to the smartcard R1, due to the difference in the two resistance values, total constant voltage + 5V is distributed to the two resistors. Since the current values I flowing at certain instants in the series electric circuit is the same, the magnitudes of the voltages $V_1$ and $V_2$ distributed to the respective resistors are proportional to the magnitudes of the resistors $R_1$ and $R_2$.

Equation 2

$$V_1 = I \text{ x } R_1, \ \ V_2 = I \text{ x } R_2$$

Equation 3

$$V_1 = V_1 + V_2$$

Upon increasing voltage drop resistor for voltage drop $R_2$, voltage applied to the resistor itself is increased, which may improve resolution required for power collection. However, as may be seen from the above Equation 3, when the resistor $R_2$ for voltage drop is increased, supply voltage applied to the smartcard drops below normal operating voltage, causing a problem, e.g., malfunction of the smartcard.

For example, when the voltage $V_2$ applied to the resistor for voltage drop R2 becomes 1 V, the supply voltage $V_1$ applied to the smartcard becomes 4 V, which is less than 4.5 V of the minimum constant voltage required for the normal operation of the smartcard, the smartcard is more likely to cause a malfunction.

In the other hand, when the resistance for voltage drop $R_2$ is smaller, the voltage to be measured becomes weak to be vulnerable to noise inside or outside the circuit, causing a problem that accuracy of the power analysis becomes poor. It is known that when a constant voltage + 5V is applied to a contact type smartcard of Class A defined in ISO 7816, the information for power analysis may be collected although a potential difference of 0.5V is generated by the resistor for voltage drop $R_2$. However, the voltage may be further lowered by external equipment such as a cable used for voltage measurement or a smartcard reader, which may cause distortion and loss of the collected power signal.

As described above, in the conventional analysis method for inspecting side channels using a resistance for voltage drop, if a resistance value for voltage drop is increased, the voltage applied to the smartcard is reduced, causing a danger that the smartcard malfunctions, and if the resistance value for voltage drop is decreased, voltage spectrum to be measured becomes too narrow, causing a problem that accuracy of analysis is deteriorated due to external noise or the like.

## DISCLOSURE OF INVENTION

## TECHNICAL PROBLEM

The present invention has been made in order to solve such conventional problems, and mainly aims to provide a contact type apparatus and method for inspecting side channels of a combined smartcard, by comprising a power analysis circuit using an operational amplifier (OM-AMP), increasing voltage spectrum for power analysis without reducing voltage applied to the smartcard. The document MESSERGES T S ET AL: "INVESTIGATIONS OF POWER ANALYSIS ATTACKS ON SMARTCARDS",USENIX WORKSHOP ON SMARTCARD TECHNOLOGY, 10 May 1999 discloses a contact type apparatus according to the preamble of claim 1.

## SOLUTION TO PROBLEM

The problem is solved by a contact type apparatus according to claim 1 and a method according to claim 6. The contact type apparatus comprises a contact inspection unit adjusting a voltage level for a power analysis using an operational amplifier (OP-AMP) connected to a ground terminal (GND) of the smartcard while the smartcard performs an encryption algorithm; a signal analysis unit receiving a voltage change signal generated when the smartcard performs the encryption algorithm and analyzing a waveform; and a control unit controlling an operation of the contact inspection unit the signal analysis unit.

Further, the contact inspection unit comprises the operational amplifier and a variable resistor connected to the operational amplifier. An inverting input terminal of the operational amplifier is connected to the ground terminal of the smartcard, a non-inverting input terminal thereof is connected to a ground of the contact type apparatus for inspecting side channels, and an output terminal thereof is connected to an input terminal of the signal analysis unit. An input terminal the variable resistor is connected to the inverting input terminal of the operational amplifier, and an output terminal thereof is connected to the output terminal of the operational amplifier.

Furthermore, the contact inspection unit may further comprise a constant voltage supply unit receiving a constant input voltage from outside and applying a positive supply voltage and a negative supply voltage to the operational amplifier.

Moreover, the constant voltage supply unit may comprise a DC-DC boost converter boosting the input voltage and thus the positive supply voltage is higher than the input voltage, and an inverting DC-DC boost converter boosting and inverting the input voltage,and thus the absolute value of the negative supply voltage is higher than the input voltage.

Further, the constant voltage supply unit may receive the input voltage from a power source terminal of a USB port.

Furthermore, the signal analysis unit may be an oscilloscope connected to the control unit to transmit signal analysis result to the control unit.

Meanwhile, a contact type method for inspecting side channels of a smartcard according to the present invention, comprises a step of performing an encryption algorithm by applying voltage through a contact terminal of the smartcard, a step of adjusting a voltage level for a power analysis using an operational amplifier connected a ground terminal of the smartcard while the smartcard performs the encryption algorithm, and a step of analyzing a waveform by receiving a voltage change signal generated when the smartcard performs the encryption algorithm under the adjusted voltage level.

Moreover, the step of adjusting a voltage level may be configured that the operational amplifier is virtually grounded, and the voltage level is adjusted through a variable resistor connected to the virtual grounded operational amplifier

Further, an inverting input terminal of the virtual grounded operational amplifier may be connected to a ground terminal of the smartcard, a non-inverting input terminal thereof may be connected to a ground of the contact type apparatus for inspecting side channels, and an output terminal thereof may be connected to an input terminal of the signal analysis unit. An input terminal of a variable resistor connected to the virtual grounded operational amplifier may be connected to the inverting input terminal of the operational amplifier, and an output terminal thereof may be connected to the output terminal of the operational amplifier.

Furthermore, the step of adjusting a voltage level may further comprise a step of supplying a constant voltage receiving a constant input voltage from outside and applying a positive supply voltage and a negative supply voltage to the operational amplifier.

Moreover, the step of supplying a constant voltage may be configured by a DC-DC boost converter boosting the input voltage, and then the positive supply voltage is higher than the input voltage, and an inverting DC-DC boost converter boosting and inverting the input voltage, and then the absolute value of the negative supply voltage is higher than the input voltage.

## ADVANTAGEOUS EFFECTS OF INVENTION

According to a contract-type apparatus and method for inspecting a combined smartcard as per the present invention configured as described above, in contact type analysis of side channels for a smartcard, the power analysis performance is improved by extending spectrum of a voltage change which changes while the smartcard executes the encryption algorithm.

Further, in the contact type analysis of side channels, the supply voltage applied to the smartcard is allowed to maintain constant voltage using virtual grounding principle of an operational amplifier. This solves a problem that conventionally, when a resistor for voltage drop is connected in series with a smartcard, the supply voltage applied to the smartcard is lower than the operation voltage, which causes malfunction of the smartcard.

## BRIEF DESCRIPTION OF THE DRAWINGS

Fig. 1 is a view illustrating a conventional method of connecting resistors for voltage drop,

Fig. 2 is a view illustrating a configuration of a contact type apparatus for inspecting side channels according to the present invention,

Fig. 3 is a view illustrating a contact inspection unit according to the present invention,

Fig. 4 is a view illustrating operational principle of a contact inspection unit according to the present invention,

Fig. 5 is view illustrating a constant voltage supply unit according to the present invention,

Fig. 6 is a flowchart illustrating a contact type method for inspecting side channels according to the present invention,

Fig. 7 is a graph illustrating power analysis result according to a conventional method of connecting resistors for voltage drop,

Fig. 8 is a graph illustrating power analysis result according to a contact type method for inspecting side channels as per to the present invention, and

Fig. 9 is a graph comparing power analysis results of Figs. 7 and 8.

## MODE FOR THE INVENTION

Hereinafter, with reference to the accompanying drawings, embodiments of the present invention will be described in detail so that those skilled in the art may easily operate the present invention. The present invention may be embodied in various different forms and is not limited to the embodiments described herein.

In order to clearly describe the present invention, parts not related to the description are omitted, and the same or similar component is denoted by the same reference numeral throughout the specification.

Throughout the specification, when a part is referred to be "connected" to another part, it includes not only "directly connected" but also "indirectly connected" with another member interposed therebetween. Further, when a part includes an element, unless specifically described otherwise, it is understood that the part may not exclude another element, but include another element.

Hereinafter, with reference to the accompanying drawings, preferred embodiments of the present invention will be described in detail.

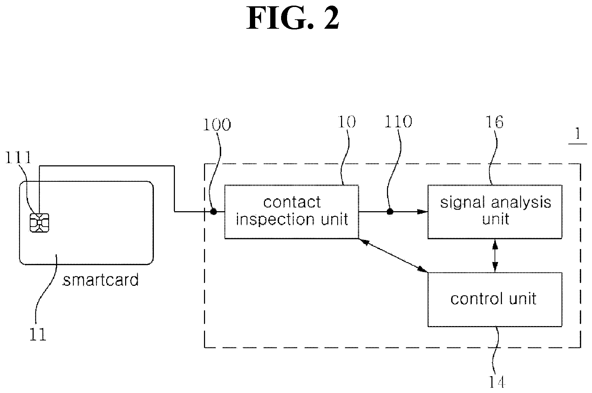

Fig. 2 illustrates a configuration of a contact type apparatus for inspecting side channels according to the present invention. The contact type apparatus for inspecting side channels 1 generally comprises a contact inspection unit 10, a control unit 14, and a signal analysis unit 16.

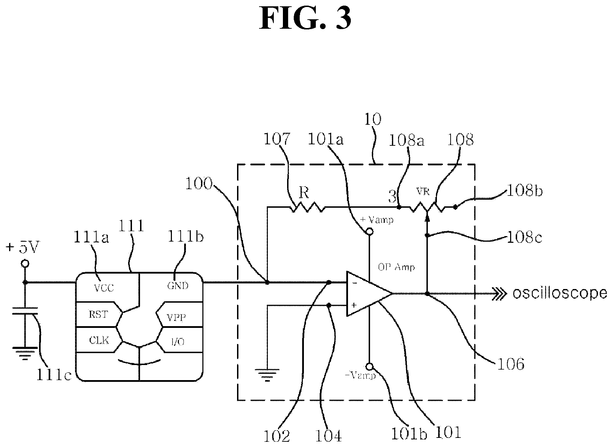

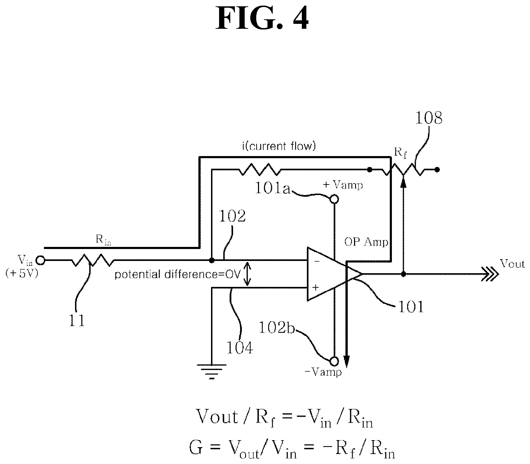

The contact inspection unit 10 is configured to be able to inspect a power change generated while the smartcard 11 performs an encryption algorithm by being electrically connected to a contact terminal 111 of the smartcard 11. In particular, according to the present invention, in contrast to a convention method using only resistor for voltage drop, the contact inspection unit 10 is configured to connects an operational amplifier (OP-AMP) to a ground terminal (GND) of the contact terminal 111 of the smartcard 11 through a predetermined input port 100 to extend the spectrum of voltage variations for analysis. A specific configuration of the contact inspection unit 10 will be described below in detail with reference to Figs. 3 and 4.

The control unit 14 controls operations of the contact inspection unit 10 and the signal analysis unit 16. The control unit 14 is electrically connected to the contact terminal 111 of the smartcard 11 to command the smartcard 11 to perform a specific encryption algorithm, detects a change in the power generated while the smartcard 11 performs the encryption algorithm as a change amount of the voltage through the contact inspection unit 10, and transmits a control signalrequired for analyzing the waveform to the signal analysis unit 16. According to an embodiment of the present invention, the control unit 14 is a host PC, the contact inspection unit 10 is a measurement board connected to the host PC through a USB port or the like.

The signal analysis unit 16 receives a voltage change signal generated when the smartcard 11 performs an encryption algorithm from the contact inspection unit 10 through a predetermined input port 110 to analyzea waveform. The signal analysis uniy 16 may be an oscilloscope connected to the control unit 14 and transmitting a signal analysis result to the control unit 14. A cryptographic device using a DC power source, such as the smartcard 11, uses a constant voltage as a supply voltage. Therefore, as shown in the above described Equation 1, if unchanged voltage is treated as a constant, the change in the power consumption that occurs during the execution of the encryption algorithm by the smartcard 11 becomes proportional to a change in the current.

Therefore, as a method for inspecting side channels, a method of detecting an encryption key value by analyzing a change in power generated while the smartcard 11 performs an encryption algorithm is used as described above. In this case, change in the power may be detected by change in the current. Since it is difficult to measure the current directly by a measuring instrument such as an oscilloscope, a resistor for voltage drop is connected in series to the smartcard, and then change in the current is converted into change in the voltage to analyze it.

However, upon using a conventional resistor for voltage drop, in order to prevent the supply voltage of the smartcard 11 connected in series from being lowered, the range in which the resistor for voltage drop may be increased is limited. As such result, the spectrum of the voltage change by the resistor for voltage drop is too narrow, which affects the distortion or loss of the power signal.

The present invention also uses a conventional resistor for voltage drop to convert a change in current into a change in voltage, and then finally analyzes the change in power consumption generated while the smartcard 11 performs the encryption algorithm, and such is the same as a method using the conventional resistor for voltage drop. However, in the present invention, by configuring an analysis circuit that connects a variable resistor to the smartcard 11 via an operational amplifier, a voltage level (amplification rate) may be adjusted using the variable resistor without lowering the supply voltage of the smartcard 11, and as such result, the spectrum of the voltage change to be analyzed may be expanded.

The technical configuration of the contact-type inspection unit 10 according to the present invention will be described in more detail using Figs. 3 and 4.

An external supply power 111c applies +5 V of a constant voltage to smartcard 11 through a power supply terminals Vcc and 111a among the contact terminals 111, and the smartcard 11 receives a control signal from the control unit through a terminal, e.g., an I/O terminal to perform an encryption algorithm. Such +5 V of a constant voltage may be supplied by the control unit 1 or an extra power supply, or directly by the contact inspection unit 10 in which the smart cart 11 is inserted.

According to an embodiment of the present invention, it may be configured to supply power to both the contact inspection unit 10 which is a measurement board connected to a host PC and the smartcard 11 inserted into the measurement board from a power supply of a control unit 14 which is the host PC.

The contact inspection unit 10 is configured to be connected to the ground terminal (GND) 111b of the smartcard 11 in series to detect a change in power consumption generated during the execution of the encryption algorithm.

To this end, the contact inspection unit 10 comprises an operational amplifier 101 and a variable resistor 108 connected to the operational amplifier 101. In the operational amplifier 101, an inverting input terminal ((-) terminal) 102 is connected to the ground terminal 111b of the smartcard 11, and a non-inverting input terminal ((+) terminal) 104 is connected to the ground of the contact type apparatus for inspecting side channels 1. As described above, when the non-inverting input terminal ((+) terminal) 104 is connected to the ground of the contact type apparatus for inspecting side channels 1, a side of the inverting input terminal 102 of the operational amplifier 101 perform a virtual ground according to operational characteristic of the operational amplifier. The effect of this virtual ground will be described below in detail with reference to Fig. 4.

Meanwhile, an output terminal 106 of the operational amplifier 101 is configured to be connected to an input terminal of the signal analysis unit 16 so that a change in voltage may be analyzed through the signal analysis unit 16.

The operational amplifier 101, as described above, is preferably selected in consideration of the operation frequency characteristics of the smartcard 11 in order to minimize loss and distortion of a signal due to a noise.

Meanwhile, for normal operation of the operational amplifier 101, a positive power supply port 101a and a negative power supply port 101b which are power terminals are connected to an external power supply device. To this end, a two power sources circuit should be configured in capable of supplying a negative voltage to the operational amplifier 101.

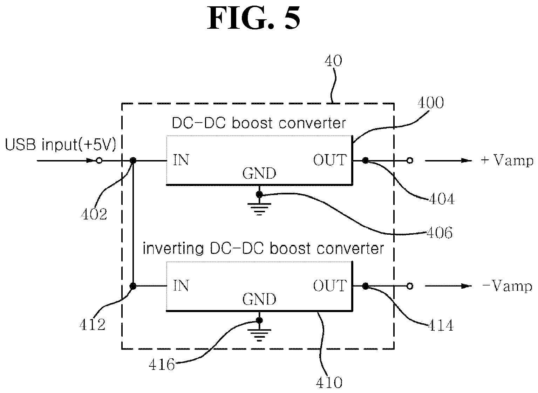

An output of the operational amplifier 101 is limited to the power supply voltage input to the operational amplifier power terminal, and saturated with respect to further output. According to an embodiment of the present invention, a constant voltage supply unit for supplying a constant voltage in a certain range to the two power supply terminals 101a and 101b of the operational amplifier 101 may further be provided. As a result, the range of the voltage supplied to the operational amplifier 101 is controlled, and thus the spectrum of the voltage change at the output terminal of the operational amplifier 101 to be analyzed may be controlled. The specific configuration of the constant voltage supply unit will be described below in detail with reference to Fig. 5.

An input terminal 108a of the variable resistor 108 is connected to the inverting input terminal 102 of the operational amplifier 101, and an output terminal 108c is connected to the output terminal 106 of the operational amplifier 101. The variable resistor 108 functions to adjust a voltage level output through the output terminal 106 of the operational amplifier 101.

According to an embodiment of the present invention, a fixed resistor 107 connected in series with the ground terminal 111b of the smartcard 11 to preliminarily drop the voltage may be installed and connected before the variable resistor 108.

Upon using the contact inspection unit 10 configured as described above, due to the electrical characteristics of the operational amplifier 101, the spectrum of final output voltage may be expanded without lowering the operating voltage supplied to the smartcard 11, and the specific operation principle will be described in detail with reference to Fig. 4.

As described above, when, in the operational amplifier 101, the inverting input terminal 102 is connected to the ground terminal 111b of the smartcard 11, and the non-inverting input terminal 104 is connected to the ground of the contact type apparatus for inspecting side channels 1, a side of the inverting input terminal 102 of the operational amplifier 101 perform a virtual ground according to operational characteristic of the operational amplifier.

Due to the effect of the virtual ground, the potential difference becomes 0V between the two input terminals 102 and 104 of the operational amplifier 101. Due to the electrical characteristics of the operational amplifier 101, when the potential difference between the two input terminals 102 and 104 becomes 0 V, input resistance of the operational amplifier 101 becomes infinite. As such result, as shown in the direction of the current flow shown in Fig. 4, the current flowed from the ground terminal 111b of the smartcard 11 does not flow toward the inverting input terminal 102 of the operational amplifier 101, but all flow toward the variable resistor 108.

Assuming that the smartcard 11 is an input resistor $R_{in}$, the current flowing through the input resistor $R_{in}$, is the

same as one through the variable resistor $R_f$, and since the final output value $V_{out}$ of the circuit is inverted with respect to the input value $V_{in}$, and thus the following equation is established.

Equation 4

$$V_{out} / R_f = - V_{in} / R_{in}$$

Equation 5

$$G = V_{out} / V_{in} = - R_f / R_{in}$$

G = voltage gain value

Therefore, the output voltage $V_{out}$ may be amplified or reduced by changing value of the variable resistor $R_f$. According to the present invention, by increasing a value of the variable resistor (Rf) within a necessary range to increase a voltage level (amplification rate) for final output, a width of the variation spectrum of the voltage may be expanded. As described above, if the width of the variation spectrum of the voltage is expanded, the voltage drop phenomenon that may be generated from an external equipment e.g., a cable used for measurement or a smartcard reader does not have a great influence, and thus the distortion and loss of a power signal may also be reduced.

According to a conventional method of connecting a resistor for voltage drop, if the resistance value for voltage drop is increased, the final output voltage level may be increased, but supply voltage applied to a smartcard may be lowered to cause malfunction as described below with reference to Fig 1.

However, according to the present invention, a final output voltage level may be increased without lowering supply voltage of the smartcard. This is because a virtual ground is formed by connecting the non-inverting input terminal 104 of the operational amplifier 101 to the ground terminal of the contact inspection unit 10. In other words, when a virtual ground is formed between the input terminals 102 and 104 of the operational amplifier 101, the ground terminal 111b of the smartcard 101 connected to the inverting input terminal 102 of the operational amplifier 101 is always set to 0V as same as the ground terminal connected to the non-inverting input terminal 104 of the operational amplifier 101 regardless of the change of the resistor $R_f$. As such result, +5 V applied to the voltage supply terminal 111a of the smartcard 11 is always maintained at a constant voltage.

Fig. 5 shows a configuration of a constant voltage supply unit for applying a constant voltage to the contact inspection unit. The constant voltage supply unit 40 controls the magnitude of the power supply voltage applied to the two power supply terminals 101a and 101b of the operational amplifier 101 of the apparatus for inspecting side channels 1.

To this end, the constant voltage supply unit 40 comprises an input terminal 402 to which 5 volts (V) of an input voltage is applied from the outside. The input terminal 402 is configured to receive the input voltage from a power supply terminal of a USB port, which may be easily obtained from a host PC or the like serving as a control unitto be simply and inexpensively implemented.

The input voltage is boosted by a DC-DC boost converter 400 so that a positive power supply voltage (+ Vamp) is higher than an input voltage, and then is applied to the power supply terminal 101a connected to the output terminal 404. Similarly, the input voltage is boosted and inverted by an inverse DC-DC boost converter 410 so that an absolute value of a negative power supply voltage (-Vamp) is higher than the input voltage, and then is applied to the power supply terminal 101b connected to the output terminal 444. Ground terminals 406 and 416 of the DC-DC boost converter 400 and the inverse DC-DC boost converter 410 are respectively grounded to the ground terminals of the apparatus for inspecting side channels 1.

Meanwhile, ripple noise during operation may be reduced by configuring an LC filter suitable for the constant voltage supply unit 40 and a peripheral circuit of Fig. 5. A method of reducing ripple noise by configuring an LC filter is widely known, and thus a detailed description thereof will be excluded.

Output of the operational amplifier 101 is controlled by an external voltage input to the power supply terminals 101a and 101b of the operational amplifier.Therefore, according to the present invention, the voltage level at the output terminal of the operational amplifier 101 may be further improved by raising a range of the external voltage input to the power supply terminals 101a and 101b of the operational amplifier.

For example, through the constant voltage supply unit 40 of Fig. 5, spectrum of the voltage change of the output terminal of the operational amplifier 101, that is, resolution (potential difference) of voltage may be greatly improved from the about 10 mV of a conventional level to 100 mV to 1000 mV level. According to the present invention, while greatly improving the resolution of the voltage change using the virtual grounding effect of the operational amplifier 101, the power supply voltage applied to the smartcard may be maintained at 5V as described above.

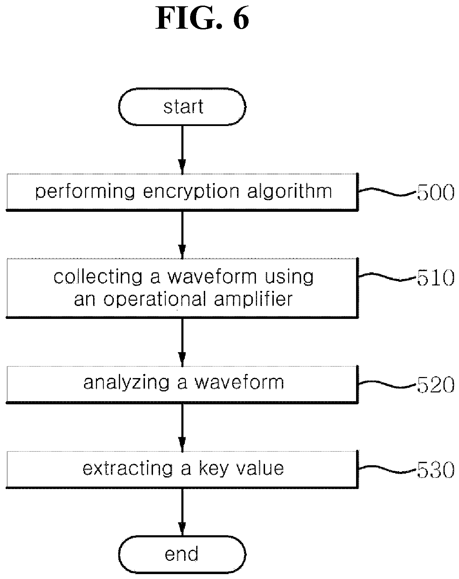

Hereinafter, with reference to Fig. 6, a contact type method for inspecting side channels of a smartcard according to the present invention will be briefly described.

A contact type method for inspecting side channel of a smartcard of the present invention comprises: a step of performing an encryption algorithm by applying voltage through a contact terminal of the smartcard (S500); a step of adjusting a voltage level for a power analysis using an operational amplifier connected a ground terminal of the smartcard while the smartcard performs the encryption algorithm (S510); and a step of analyzing a waveform by receiving a voltage change signal generated when the smartcard performs the encryption algorithm under the adjusted voltage level (S520).

According to the present invention, key value of corresponding algorithm is extracted by various analysis methods on the analyzed power information waveform so that security of the encryption algorithm may be tested (S530).

Further, in the step of adjusting a voltage level (S510), it is preferable that the operational amplifier is virtually grounded, and the voltage level is adjusted through a variable resistor connected to the virtual grounded operational amplifier. Here, in the virtual grounded operational amplifier, an inverting input terminal is connected to a ground terminal of the smartcard, a non-inverting input terminal is connected to a ground of the contact type apparatus for inspecting side channels, and an input terminal of a variable resistor connected to the virtual grounded operational amplifier is connected to the inverting input terminal of the operational amplifier and an output terminal thereof is connected to the output terminal of the operational amplifier.

Further, the step of adjusting a voltage level (S510) may further comprises a step of supplying a constant voltage receiving a constant input voltage from the outside and applying a positive supply voltage and a negative supply voltage to the operational amplifier. Here, the step of supplying a constant voltage may be configured by a DC-DC boost converter boosting the input voltage so that the positive supply voltage is higher than the input voltage, and an inverting DC-DC boost converter boosting and inverting the input voltage so that the absolute value of the negative supply voltage is higher than the input voltage.

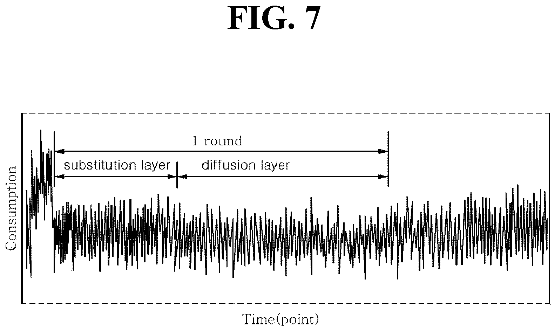

Figs. 7 to 9 illustrates comparison of power analysis results according to a conventional method of connecting resistor for voltage drop and a contact type method for inspecting side channels according to the present invention

Waveform of the voltage change used in the above experiment is a collection of what generated during the execution of the ARIA encryption algorithm by the smartcard. Each 20,000 waveforms at 250 MS/s was collected by an oscilloscope, and the same compression method (250 MS s -> 25 MS/s) and sorting method were used to both waveforms. The collected waveforms were analyzed for power information by a simple power analysis (SPA) method.

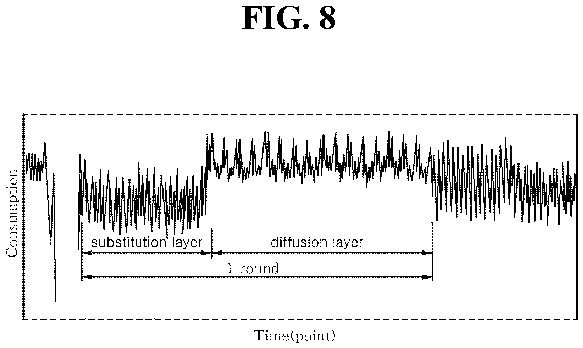

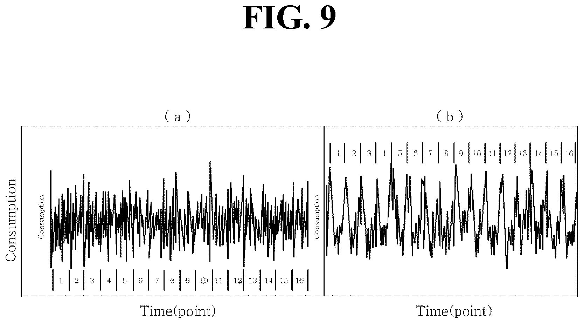

Fig. 7 shows a change in power information of a substitution layer and a diffusion layer, generated during performing round 1 of ARIA encryption algorithm collected by the conventional method of connecting resistor for voltage drop, and Fig. 8 illustrates a change in power information of a substitution layer and a diffusion layer, generated during performing round 1 of ARIA encryption algorithm collected by a method using an operational amplifier according to the present invention. Fig. 9 illustrates comparison of changes in power information for a diffusion layer of the round 1 of the ARIA algorithm in the graphs of Figs. 7 and 8.

As shown in Figs. 7 and 8, in both the conventional method of connecting resistor for voltage drop and the method using an operational amplifier according to the present invention, operations of the substitution layer and the diffusion layer are separated. However, as shown in Fig. 9, according to the conventional method, 16 operations of the diffusion layer are not clearly distinguished, but it may be seen that the operations of 16 blocks are clearly distinguished according to the present invention.

As such result, it may be seen that SPA analysis of power information collected according to a method for inspecting side channels of the present invention is superior. This means that it is possible to reduce consumption of resource, e.g., time spent on side channel analysis for a clear SPA analysis, and the amount of collected data.

Table 1 below shows results for CPA analysis of output values of a substitution layer of a round 1 of ARIA algorithm using 20,000 waveforms collected.

[Table 1]

| Right Key | Comparative Examples | | Embodiments | |
|---|---|---|---|---|
| | Key | Ratio | Key | Ratio |
| 1st key OxD4 | Ox35 | 0.86 | OxD4 | 1.50 |
| 2nd key Ox15 | Ox15 | 1.05 | Ox15 | 2.59 |
| 3rd key 0XA7 | Ox36 | 0.99 | OxA7 | 1.44 |
| 4th key 0x5C | OxDF | 0.88 | Ox5C | 1.56 |

(continued)

| Right Key | Comparative Examples | | Embodiments | |
|---|---|---|---|---|
| | Key | Ratio | Key | Ratio |
| 5th key 0x79 | Ox4F | 0.88 | Ox79 | 1.80 |
| 6th key 0x4B | Ox4B | 1.14 | Ox4B | 1.90 |
| 7th key 0x85 | Ox47 | 0.91 | Ox85 | 1.74 |
| 8th key 0xC5 | Ox3B | 0.82 | OxC5 | 1.85 |
| 9th key 0xE0 | Ox36 | 0.75 | OxE0 | 1.65 |
| 10th key 0xD2 | OxD2 | 1.17 | OxD2 | 1.53 |
| 11th key 0xA0 | OxF0 | 0.98 | OxA0 | 1.97 |
| 12th key 0xB3 | OxB3 | 1.04 | OxB3 | 1.80 |
| 13th key 0xCB | Ox96 | 0.95 | OxCB | 1.55 |
| 14th key 0x79 | Ox62 | 0.78 | Ox79 | 1.71 |
| 15th key 0x3B | Ox3B | 1.17 | Ox3B | 1.12 |
| 16th key 0xF6 | OxF6 | 1.03 | OxF6 | 1.57 |

The comparative examples are results of analyzing power information waveforms collected using the conventional resistor for voltage drop, and the embodiments are results of analyzing power information waveforms collected using an operational amplifier according to the present invention.

The "Right Key" values on the left are 16 partial keys used in the 1 round substitution layer of the ARIA algorithm, and Ratio is a ratio of real right keys and the correlation coefficient values of guessing keys which has the highest correlation coefficient except the right keys. If the ratio value exceeds 1, it is determined that the corresponding partial key value is analyzed.

As shown in Table 1, only 6 partial keys could be analyzed when using the conventional resistor for voltage drop, however all of 16 partial keys could be analyzed when using an operational amplifier according to the present invention. Further, comparing the Ratio values of 6 partial keys analyzed in both cases, the analysis results of the waveforms collected by a inspection method according to the present invention show higher values. This means that the present invention is superior in the analysis performance to the partial keys.

The contact type apparatus and method for inspecting side channels of the smartcard, as described above, are not limited to the configurations and methods of the embodiments described in the specification. Rather, all or some of the embodiments may be selectively combined so that various modifications may be performed.

Further, it should be noted that the embodiments described above are merely intended to illustrate the invention and are not intended to limit the invention. It will be appreciated that various embodiments are possible within the scope of the claims.

Further, the contact type apparatus and the method for inspecting side channels of a smartcard as described above may be implemented by storing commands for executing a method on a computer-readable recording medium. Examples ofthe computer-readable recording medium widely include various known recording media, e.g., ROM, RAM, CD-ROM, magnetic tape, floppy disk, optical data storage device, solid state drive.

## Claims

1. A contact type apparatus for inspecting side channels of a smartcard (11) comprising:

   a contact inspection unit (10) configured to adjust a voltage level for a power analysis using an operational amplifier (OP-AMP, 101) connected to a ground terminal (GND, 111b) of the smartcard while the smartcard performs an encryption algorithm;
   a signal analysis unit (16) configured to receive a voltage change signal generated when the smartcard performs the encryption algorithm and analyzing a waveform; and
   a control unit (14) configured to control an operation of the contact inspection unit and the signal analysis unit, **characterized in that:**

the contact inspection unit (10) comprises the operational amplifier (101) and a variable resistor (108) connected to the operational amplifier,

wherein an inverting input terminal (102) of the operational amplifier is connected to the ground terminal (111b) of the smartcard, a non-inverting input terminal (104) thereof is connected to a ground of the contact type apparatus for inspecting side channels, and an output terminal (106) thereof is connected to an input terminal of the signal analysis unit (16), and

wherein an input terminal (108a) of the variable resistor is connected to the inverting input terminal (102) of the operational amplifier, and an output terminal (108c) thereof is connected to the output terminal (106) of the operational amplifier.

2. The contact type apparatus for inspecting side channels of a smartcard of claim 1, wherein the contact inspection unit (10) further comprises a constant voltage supply unit (40) configured to receive a constant input voltage from outside and applying a positive supply voltage and a negative supply voltage to the operational amplifier (101).

3. The contact type apparatus for inspecting side channels of a smartcard of claim 2, wherein the constant voltage supply unit (40) comprises:

a DC-DC boost converter (400) configured to boost the input voltage, and thus the positive supply voltage is higher than the input voltage; and

an inverting DC-DC boost converter (410) configured to boost and invert the input voltage, and thus the absolute value of the negative supply voltage is higher than the input voltage.

4. The contact type apparatus for inspecting side channels of a smartcard of claim 2, wherein the constant voltage supply unit (40) receives the input voltage from a power source terminal of a USB port.

5. The contact type apparatus for inspecting side channels of a smartcard of claim 1, wherein the signal analysis unit (16) is an oscilloscope connected to the control unit (14) to transmit signal analysis result to the control unit.

6. A contact type method for inspecting side channels of a smartcard, comprising:

a step of performing an encryption algorithm by applying voltage through a contact terminal of the smartcard;

a step of adjusting a voltage level for a power analysis using an operational amplifier connected a ground terminal of the smartcard while the smartcard performs the encryption algorithm; and

a step of analyzing a waveform by receiving a voltage change signal generated when the smartcard performs the encryption algorithm under the adjusted voltage level, **characterized in that:**

an inverting input terminal of the virtual grounded operational amplifier is connected to a ground terminal of the smartcard, and a non-inverting input terminal thereof is connected to a ground of the contact type apparatus for inspecting side channels, an output terminal thereof is connected to an input terminal of the signal analysis unit and

wherein an input terminal of a variable resistor connected to the virtual grounded operational amplifier is connected to the inverting input terminal of the operational amplifier and an output terminal thereof is connected to the output terminal of the operational amplifier.

7. The contact type method for inspecting side channels of a smartcard of claim 6, wherein the step of adjusting a voltage level is configured that the operational amplifier is virtually grounded, and the voltage level is adjusted through a variable resistor connected to the virtual grounded operational amplifier.

8. The contact type method for inspecting side channels of a smartcard of claim 6, wherein the step of adjusting a voltage level further comprises a step of supplying a constant voltage receiving a constant input voltage from outside and applying a positive supply voltage and a negative supply voltage to the operational amplifier.

9. The contact type method for inspecting side channels of a smartcard of claim 8, wherein the step of supplying a constant voltage is configured by a DC-DC boost converter boosting the input voltage, and thus the positive supply voltage is higher than the input voltage, and an inverting DC-DC boost converter boosting and inverting the input voltage, and thus the absolute value of the negative supply voltage is higher than the input voltage.

**Patentansprüche**

1. Kontakttypvorrichtung zum Prüfen von Seitenkanälen einer Smartcard (11), umfassend:

eine Kontaktprüfeinheit (10), die ausgelegt ist, um ein Spannungsniveau für eine Leistungsanalyse unter Verwendung eines Operationsverstärkers (OP-AMP, 101), der mit einem Masseanschluss (GND, 111b) der Smartcard verbunden ist, einzustellen, während die Smartcard einen Verschlüsselungsalgorithmus durchführt;
eine Signalanalyseeinheit (16), die ausgelegt ist, um ein Spannungsänderungssignal zu empfangen, das erzeugt wird, wenn die Smartcard den Verschlüsselungsalgorithmus durchführt und eine Wellenform analysiert; und
eine Steuereinheit (14), die ausgelegt ist, um eine Operation der Kontaktprüfeinheit und der Signalanalyseeinheit zu steuern, **dadurch gekennzeichnet, dass**:

die Kontaktprüfeinheit (10) den Operationsverstärker (101) und einen Regelwiderstand (108), der mit dem Operationsverstärker verbunden ist, umfasst,
wobei ein invertierender Eingangsanschluss (102) des Operationsverstärkers mit dem Masseanschluss (111b) der Smartcard verbunden ist, ein nichtinvertierender Eingangsanschluss (104) davon mit einer Masse der Kontakttypvorrichtung zum Prüfen von Seitenkanälen verbunden ist, und ein Ausgangsanschluss (106) davon mit einem Eingangsanschluss der Signalanalyseeinheit (16) verbunden ist, und
wobei ein Eingangsanschluss (108a) des Regelwiderstands mit dem invertierenden Eingangsanschluss (102) des Operationsverstärkers verbunden ist, und ein Ausgangsanschluss (108c) davon mit dem Ausgangsanschluss (106) des Operationsverstärkers verbunden ist.

2. Kontakttypvorrichtung zum Prüfen von Seitenkanälen einer Smartcard nach Anspruch 1, wobei die Kontaktprüfeinheit (10) ferner eine Konstantspannungsquelleneinheit (40) umfasst, die ausgelegt ist, um eine Konstanteingangsspannung von außerhalb zu empfangen, und eine positive Quellenspannung und eine negative Quellenspannung an den Operationsverstärker (101) anbringt.

3. Kontakttypvorrichtung zum Prüfen von Seitenkanälen einer Smartcard nach Anspruch 2, wobei die Konstantspannungsquelleneinheit (40) umfasst:

einen DC-DC-Hochsetzsteller (400), der ausgelegt ist, um die Eingangsspannung nach oben zu setzen, und somit die positive Quellenspannung höher ist als die Eingangsspannung; und
einen invertierenden DC-DC-Hochsetzsteller (410), der ausgelegt ist, um die Eingangsspannung nach oben zu setzen und zu invertieren, und somit der absolute Wert der negativen Quellenspannung höher ist als die Eingangsspannung.

4. Kontakttypvorrichtung zum Prüfen von Seitenkanälen einer Smartcard nach Anspruch 2, wobei die Konstantspannungsquelleneinheit (40) die Eingangsspannung von einem Leistungsquellenanschluss einer USB-Schnittstelle empfängt.

5. Kontakttypvorrichtung zum Prüfen von Seitenkanälen einer Smartcard nach Anspruch 1, wobei die Signalanalyseeinheit (16) ein Oszilloskop ist, das mit der Steuereinheit (14) verbunden ist, um das Signalanalyseergebnis an die Steuereinheit zu übertragen.

6. Kontakttypverfahren zum Prüfen von Seitenkanälen einer Smartcard, umfassend:

einen Schritt des Durchführens eines Verschlüsselungsalgorithmus durch Anbringen von Spannung durch einen Kontaktanschluss der Smartcard;
einen Schritt des Einstellens eines Spannungsniveaus für eine Leistungsanalyse unter Verwendung eines Operationsverstärkers, der mit einem Masseanschluss der Smartcard verbunden ist, während die Smartcard den Verschlüsselungsalgorithmus durchführt; und
einen Schritt des Analysierens einer Wellenform durch Empfangen eines Spannungsänderungssignals, das erzeugt wird, wenn die Smartcard den Verschlüsselungsalgorithmus unter dem eingestellten Spannungsniveau durchführt, **dadurch gekennzeichnet, dass**:

ein invertierender Eingangsanschluss des virtuellen geerdeten Operationsverstärkers mit einem Masseanschluss der Smartcard verbunden ist, und ein nichtinvertierender Eingangsanschluss davon mit einer Masse der Kontakttypvorrichtung zum Prüfen von Seitenkanälen verbunden ist, ein Ausgangsanschluss davon mit einem Eingangsanschluss der Signalanalyseeinheit verbunden ist und wobei ein Eingangsanschluss eines Regelwiderstands, der mit dem virtuellen geerdeten Operationsverstärker verbunden ist, mit dem invertierenden Eingangsanschluss des Operationsverstärkers verbunden ist und ein Ausgangsanschluss davon mit dem Ausgangsanschluss des Operationsverstärkers verbunden ist.

7. Kontakttypverfahren zum Prüfen von Seitenkanälen einer Smartcard nach Anspruch 6, wobei der Schritt des Einstellens eines Spannungsniveaus so ausgelegt ist, dass der Operationsverstärker virtuell geerdet wird, und das Spannungsniveau durch einen Regelwiderstand, der mit dem virtuellen geerdeten Operationsverstärker verbunden ist, eingestellt wird.

8. Kontakttypverfahren zum Prüfen von Seitenkanälen einer Smartcard nach Anspruch 6, wobei der Schritt des Einstellens eines Spannungsniveaus ferner einen Schritt des Zuführens einer Konstantspannung, die eine Konstanteingangsspannung von außerhalb empfängt, und des Anbringens einer positiven Quellenspannung und einer negativen Quellenspannung an dem Operationsverstärker umfasst.

9. Kontakttypverfahren zum Prüfen von Seitenkanälen einer Smartcard nach Anspruch 8, wobei der Schritt des Zuführens einer Konstantspannung durch einen DC-DC-Hochsetzsteller, der die Eingangsspannung hochsetzt, und somit die positive Quellenspannung höher ist als die Eingangsspannung, und durch einen invertierenden DC-DC-Hochsetzsteller ausgelegt ist, der die Eingangsspannung hochsetzt und invertiert, und somit der absolute Wert der negativen Quellenspannung höher ist als die Eingangsspannung.

**Revendications**

1. Appareil de type à contacts pour l'inspection de canaux latéraux d'une carte à puce (11), comprenant :

   une unité d'inspection de contacts (10) configurée pour régler un niveau de tension pour une analyse de puissance à l'aide d'un amplificateur opérationnel (OP-AMP, 101) relié à une borne de masse (GND, 111b) de la carte à puce pendant que la carte à puce exécute un algorithme de chiffrement ;
   une unité d'analyse de signal (16) configurée pour recevoir un signal de changement de tension généré lorsque la carte à puce exécute l'algorithme de chiffrement et analyser une forme d'onde ; et
   une unité de commande (14) configurée pour commander un fonctionnement de l'unité d'inspection de contacts et de l'unité d'analyse de signal, l'appareil étant **caractérisé en ce que** :

   l'unité d'inspection de contacts (10) comprend l'amplificateur opérationnel (101) et une résistance variable (108) reliée à l'amplificateur opérationnel,
   dans lequel appareil une borne d'entrée inverseuse (102) de l'amplificateur opérationnel est reliée à la borne de masse (111b) de la carte à puce, une borne d'entrée non inverseuse (104) de celui-ci est reliée à une masse de l'appareil de type à contacts pour l'inspection de canaux latéraux, et une borne de sortie (106) de celui-ci est reliée à une borne d'entrée de l'unité d'analyse de signal (16), et
   dans lequel appareil une borne d'entrée (108a) de la résistance variable est reliée à la borne d'entrée inverseuse (102) de l'amplificateur opérationnel, et une borne de sortie (108c) de celui-ci est reliée à la borne de sortie (106) de l'amplificateur opérationnel.

2. Appareil de type à contacts pour l'inspection de canaux latéraux d'une carte à puce selon la revendication 1, dans lequel l'unité d'inspection de contacts (10) comprend également une unité d'alimentation à tension constante (40) configurée pour recevoir une tension d'entrée constante de l'extérieur et appliquer une tension d'alimentation positive et une tension d'alimentation négative à l'amplificateur opérationnel (101).

3. Appareil de type à contacts pour l'inspection de canaux latéraux d'une carte à puce selon la revendication 2, dans lequel l'unité d'alimentation à tension constante (40) comprend :

   un convertisseur élévateur CC-CC (400) configuré pour relever la tension d'entrée, avec pour résultat que la tension d'alimentation positive est supérieure à la tension d'entrée ; et
   un convertisseur élévateur CC-CC inverseur (410) configuré pour relever et inverser la tension d'entrée, avec pour résultat que la valeur absolue de la tension d'alimentation négative est supérieure à la tension d'entrée.

**4.** Appareil de type à contacts pour l'inspection de canaux latéraux d'une carte à puce selon la revendication 2, dans lequel l'unité d'alimentation à tension constante (40) reçoit la tension d'entrée d'une borne de source d'alimentation d'un port USB.

**5.** Appareil de type à contacts pour l'inspection de canaux latéraux d'une carte à puce selon la revendication 1, dans lequel l'unité d'analyse de signal (16) est un oscilloscope relié à l'unité de commande (14) pour envoyer un résultat d'analyse de signal à l'unité de commande.

**6.** Procédé de type à contacts pour l'inspection de canaux latéraux d'une carte à puce, comprenant :

une étape d'exécution d'un algorithme de chiffrement par l'application d'une tension sur une borne de contact de la carte à puce ;
une étape de réglage d'un niveau de tension pour une analyse de puissance à l'aide d'un amplificateur opérationnel relié à une borne de masse de la carte à puce pendant que la carte à puce exécute l'algorithme de chiffrement ;
une étape d'analyse d'une forme d'onde par la réception d'un signal de changement de tension généré lorsque la carte à puce exécute l'algorithme de chiffrement sous le niveau de tension réglé, **le procédé étant caractérisé en ce que :**

une borne d'entrée inverseuse de l'amplificateur opérationnel relié à la masse virtuellement est reliée à une borne de masse de la carte à puce, et une borne d'entrée non inverseuse de celui-ci est reliée à une masse de l'appareil de type à contacts pour l'inspection de canaux latéraux, une borne de sortie de celui-ci est reliée à une borne d'entrée de l'unité d'analyse de signal, et
dans lequel procédé une borne d'entrée d'une résistance variable reliée à l'amplificateur opérationnel relié à la masse virtuellement est reliée à la borne d'entrée inverseuse de l'amplificateur opérationnel, et une borne de sortie de celui-ci est reliée à la borne de sortie de l'amplificateur opérationnel.

**7.** Procédé de type à contacts pour l'inspection de canaux latéraux d'une carte à puce selon la revendication 6, dans lequel l'étape de réglage d'un niveau de tension est configurée de telle façon que l'amplificateur opérationnel soit relié à la masse virtuellement, et le niveau de tension est réglé par une résistance variable reliée à l'amplificateur opérationnel relié à la masse virtuellement.

**8.** Procédé de type à contacts pour l'inspection de canaux latéraux d'une carte à puce selon la revendication 6, dans lequel l'étape de réglage d'un niveau de tension comprend également une étape de fourniture d'une tension constante par la réception d'une tension d'entrée constante depuis l'extérieur et l'application d'une tension d'alimentation positive et d'une tension d'alimentation négative à l'amplificateur opérationnel.

**9.** Procédé de type à contacts pour l'inspection de canaux latéraux d'une carte à puce selon la revendication 8, dans lequel l'étape de fourniture d'une tension constante est configurée par un convertisseur élévateur CC-CC qui relève la tension d'entrée, avec pour résultat que la tension d'alimentation positive est supérieure à la tension d'entrée, et par un convertisseur élévateur CC-CC inverseur qui relève et inverse la tension d'entrée, avec pour résultat que la valeur absolue de la tension d'alimentation négative est supérieure à la tension d'entrée.

# FIG. 1

$$V_1 = I \cdot R_1 \qquad V_2 = I \cdot R_2$$

$$V = V_1 + V_2$$

# FIG. 2

# FIG. 3

# FIG. 4

$$Vout / R_f = -V_{in} / R_{in}$$

$$G = V_{out} / V_{in} = -R_f / R_{in}$$

# FIG. 5

# FIG. 6

```
        ( start )
            |
            v
+---------------------------+
| performing encryption     |~~~500
| algorithm                 |
+---------------------------+
            |
            v
+---------------------------+
| collecting a waveform     |~~~510
| using an operational      |
| amplifier                 |
+---------------------------+
            |
            v
+---------------------------+
| analyzing a waveform      |~~~520
+---------------------------+
            |
            v
+---------------------------+
| extracting a key value    |~~~530
+---------------------------+
            |
            v
        ( end )
```

# FIG. 7

# FIG. 8

# FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MESSERGES T S et al.** INVESTIGATIONS OF POWER ANALYSIS ATTACKS ON SMARTCARDS. *USENIX WORKSHOP ON SMARTCARD TECHNOLOGY,* 10 May 1999